# EUROPÄISCHE PATENTSCHRIFT

(11) **EP 3 221 620 B1**
(45) Veröffentlichungstag und Bekanntmachung des Hinweises auf die Patenterteilung: **01.05.2019**
(21) Anmeldenummer: 15777712.9
(22) Anmeldetag: 13.10.2015
(51) Int. Cl.: F16J 9/02, F16J 9/06

(54) **ZWEITEILIGER KOLBENRING MIT AXIALER STABILISIERUNG**
AXIALLY STABILIZED TWO-PART PISTON RING
SEGMENT DE PISTON EN DEUX PARTIES, POURVU D'UNE STABILISATION AXIALE

(30) Priorität: 20.11.2014 DE 102014223685
(43) Veröffentlichungstag der Anmeldung: 27.09.2017
(73) Patentinhaber: Federal-Mogul Burscheid GmbH, 51399 Burscheid (DE)
(72) Erfinder: RUCH, Fabian, 51375 Leverkusen (DE)
(74) Vertreter: Becker Kurig Straus
(86) Internationale Anmeldenummer: PCT/EP2015/073654
(87) Internationale Veröffentlichungsnummer: WO 2016/078834

(56) Entgegenhaltungen:
- JP-A- 2007 032 446
- US-A- 2 855 254
- US-A- 2 951 732
- US-A- 3 326 561
- US-A- 3 370 858

## Beschreibung

Die vorliegende Erfindung betrifft einen zweiteiligen Kolbenring mit axialer Stabilisierung, mit einem Grundkörper mit einem im Wesentlichen L-förmigen Querschnitt und einem axialen Stabilisierungselement, das in Axialrichtung elastisch ist, so dass es den Grundkörper gegen eine Kolbenringnutflanke drückt, während er sich auf der anderen Kolbenringnutflanke abstützt.

Bisher sind keine Kolbenringe bekannt, die so ausgelegt sind, dass sie ständig mit beiden Kolbenringnutflanken in Kontakt stehen, da dies die Beweglichkeit und die Anpassungsfähigkeit des Kolbenrings sowie die Montierbarkeit deutlich herabsetzen würde.

Es sind jedoch bereits verschiedene Kolbenringe bekannt, die eine innere Expanderfeder umfassen, wie sie beispielsweise in den Patentanmeldungen No. US5794941 (A), US 3,326,561 oder US 2,951,732 beschrieben sind.

Es ist die Aufgabe der vorliegenden Erfindung, einen Kolbenring und insbesondere auch einen Ölabstreifring mit verbesserten Eigenschaften bereitzustellen.

Dies wird erfindungsgemäß durch einen Kolbenring mit den Merkmalen des Anspruchs 1 erreicht. Bevorzugte Ausführungen sind in den abhängigen Ansprüchen beschrieben.

Erfindungsgemäß wir ein zweiteiliger Kolbenring mit axialer Stabilisierung bereitgestellt. Der zweiteilige Kolbenring umfasst dabei einen Grundkörper mit einem im Wesentlichen L-förmigen Querschnitt. Der Grundkörper weist eine äußeren Lauffläche auf, die an einem Laufflächenschenkel angeordnet ist und ist weiter mit einem Ringflankensteg versehen. Der Laufflächenschenkel und der Ringflankensteg bilden zusammen zwei Schenkel des L-fÖrmigen Querschnitts. Der zweiteilige Kolbenring umfasst weiter ein axiales Stabilisierungselement, das zumindest teilweise an dem Ringflankensteg anliegend angeordnet ist. Das axiale Stabilisierungselement ist dabei zumindest in Axialrichtung elastisch und steht über den Laufflächenschenkel vor.

In einer beispielhaften Ausführungsform des zweiteiligen Kolbenrings weist dieser in einem gespannten Zustand in Axialrichtung eine Höhe auf, die größer ist als eine Breite der Kolbenringnut, in der er verwendet werden soll. Das axiale Stabilisierungselement soll sich in einem eingebauten Zustand auf der einen Kolbenringnutflanke abstützen und den Ringflankensteg gegen die andere Kolbenringnutflanke drücken. Dadurch kann eine verbesserte Abdichtung des Kolbenrings gegenüber der Kolbenringflanke erreicht werden. Bei einem eingebauten Kolbenring liegt der Ringflankensteg an der einen Kolbenringnutflanke an, während das gegenüberliegende Ende des Laufflächenschenkels sich in einem (kleinen) Abstand von der gegenüberliegenden Kolbenringnutflanke befindet. Die Feder drückt den Ringflankensteg gegen die eine Ringflanke und stützt sich dabei auf der gegenüberliegenden Ringflanke ab.

In einer beispielhaften Ausführungsform des zweiteiligen Kolbenrings weist dieser bereits in einem ungespannten Zustand in Axialrichtung eine Höhe auf, die größer ist als eine Breite der Kolbenringnut, in der er verwendet werden soll. Das axiale Stabilisierungselement soll sich in einem eingebauten Zustand auf der einen Kolbenringnutflanke abstützen und den Ringflankensteg gegen die andere Kolbenringnutflanke drücken. Dadurch kann eine verbesserte Abdichtung des Kolbenrings gegenüber der Kolbenringflanke erreicht werden. Bei einem eingebauten Kolbenring liegt der Ringflankensteg an der einen Kolbenringnutflanke an, während das gegenüberliegende Ende des Laufflächenschenkels sich in einem (kleinen) Abstand von der gegenüberliegenden Kolbenringnutflanke befindet.

Erfindungsgemäß ist der zweiteilige Kolbenring ebenfalls als Ölabstreifring ausgeführt, und umfasst er genau zwei oder mindestens zwei Abstreifstege, die auf der Lauffläche angeordnet sind. Bevorzugt sind auch hier mindestens zwei Öl-Abstreifstege auf der Lauffläche. Bei Verwendung von zwei Ölabstreifstegen wird der Ringflankensteg an der dem Kolbenboden zugewandten Seite anliegend angeordnet, sodass abgestreiftes Öl durch den Spalt zwischen Grundkörper und der zugehörigen Kolbenringflanke hinter den Kolbenring gelangen kann, von wo aus es in Richtung Kurbelgehäuse abgeleitet werden kann.

In einer weiteren beispielhaften Ausführungsform des zweiteiligen Ölabstreifring mit axialer Stabilisierung ist dieser als Ölschlitzring, als Dachfasenring, als geschlitzter Dachfasenring, als Gleichfasenring oder als geschlitzter Gleichfasenring ausgeführt.

Erfindungsgemäß weisen die zwei bzw. mindestens zwei Abstreifstege einen Versatz auf und/oder ist der Grundkörper des zweiteiligen Kolbenrings im nicht eingebauten Zustand vorgetwistet. Durch den Versatz kann einer Twistneigung bzw. Verwindung des Kolbenrings in der Kolbenringnut entgegengewirkt werden, wodurch sich das Abstreifverhalten positiv beeinflussen lässt. Der Begriff "Versatz" ist hier so zu interpretieren, dass die Abstreifstege eine unterschiedliche Höhe über der Lauffläche bzw. einen unterschiedlichen Durchmesser aufweisen. Wenn sich der Ring in der Kolbenringnut verwindet, kann so sichergestellt werden, dass dann beide Abstreifstege an der Zylinderinnenfläche anliegen.

In einer alternativen Ausführungsform des zweiteiligen Kolbenrings gemäß der Erfindung ist der Grundkörper vorgetwistet. Durch eine innere Verwindung kann einer unerwünschten Verwindung im Betrieb ähnlich wie mit den versetzten Abstreifstegen entgegengewirkt werden.

In einer zusätzlichen beispielhaften Ausführungsform des zweiteiligen Kolbenrings ist der Grundkörper in Umfangsrichtung unterschiedlich vorgetwistet ist, wobei bevorzugt der Twist an dem Ringrücken gegenüber den Stoßenden stärker ausgeführt als an den Stoßenden.

In einer weiteren zusätzlichen beispielhaften Ausführungsform des zweiteiligen Ölabstreifrings weisen die Abstreifstege am Grundkörper in Umfangsrichtung einen unterschiedlichen Versatz auf, wobei bevorzugt der Versatz an dem Ringrücken gegenüber den Stoßenden stärker ausgeführt als an den Stoßenden selbst.

Auch hier kann der Kolbenring so ausgeführt werden, dass seine Abdicht- oder Abstreifleistung bei einem Arbeitstakt bzw. bei einer Abwärtsbewegung des Kolbens ideal ist.

In einer anderen beispielhaften Ausführungsform des zweiteiligen Kolbenrings ist das axiale Stabilisierungselement als Wellenfeder oder als Mäanderfeder ausgeführt. Die Wellenfeder oder Mäanderfeder schlängelt sich in der Kolbenringnut zwischen den Flanken der Kolbenringnut hin und her. Sie wirkt damit als eine Blattfeder mit mehreren Wellen, die sich zwischen einer Kolbenringnutflanke und dem Ringflankensteg abstützt. Es ist ebenfalls möglich, das axiale Stabilisierungselement als L-förmige oder rechteckige Schlauchfeder auszuführen, die sich in der Kolbenringebene zusammendrücken lässt. Auch eine Schlauchfeder kann bei geeigneter Auslegung in Axialrichtung des Zylinders zusammengedrückt werden.

In einer zusätzlichen beispielhaften Ausführungsform des zweiteiligen Kolbenrings weist die Mäanderfeder einen Mäanderwinkel zur Kolbenringebene von weniger als 90°, bevorzugt von 20° bis 70°, weiter bevorzugt von 30° bis 60° noch weiter bevorzugt von 40° bis 50° auf. Dadurch ist sichergestellt, dass die Feder immer in Axialrichtung einfedern kann, was bei einem Mäanderwinkel von 90° nicht mehr möglich wäre. Je steiler der Mänderwinkel ist, desto härter wird die Feder in Axialrichtung und desto stärker besteht die Gefahr, dass sich der Kolbenring in der Kolbenringnut festklemmt. Je flacher der Mänderwinkel ist, desto weicher wird die Feder in Axialrichtung und desto stärker besteht die Gefahr, dass sich der Grundkörper in der Kolbenringnut vertwisten bzw. verwinden kann und sich dabei verklemmt oder einen stärkeren Verschleiß erzeugt.

In einer weiteren beispielhaften Ausführungsform des zweiteiligen Kolbenrings steht das axiale Stabilisierungselement nach innen über den Ringflankensteg über. Damit erstreckt sich das axiale Stabilisierungselement weiter nach innen als der Ringflankensteg.

In einer anderen beispielhaften Ausführungsform des zweiteiligen Kolbenrings steht das axiale Stabilisierungselement in der Höhe über das axiale Stabilisierungselement in der Höhe über eine innere Flankenfläche des Ringflankenstegs über. Dabei kann das Stabilisierungselement auch von innen gegen den Ringflankensteg drücken und diesen gegen die Zylinderinnenfläche drängen. Dadurch lässt sich eine gleichmäßigere Anpresskraftverteilung erreichen.

In einer zusätzlichen beispielhaften Ausführungsform des zweiteiligen Kolbenrings weist das axiale Stabilisierungselement eine ungespannte Länge auf, die größer ist als die Länge der Kolbenringnut, bzw. die länger ist als der mittlere Umfang des Grundkörpers bzw. länger ist als der abgewickelte Grundkörper. Damit kann das Stabilisierungselement auch wie eine herkömmliche Expanderfeder wirken und so den Ring zusätzlich nach außen in Richtung Zylinderinnenfläche drängen. Dadurch lässt sich die Abdicht- und/oder Abstreifwirkung des Kompressions- oder Ölabstreifrings weiter verbessern.

In einer weiteren beispielhaften Ausführungsform des zweiteiligen Kolbenrings ist die Innenfläche des Laufflächenschenkels von dem Ringflankensteg in Richtung weg von dem Ringflankensteg verjüngt ausgeführt. Bevorzugt kann der Ringflankensteg konisch verjüngt ausgeführt werden. Durch diese Maßnahme lässt sich sicherstellen, dass die untere (weiter vom Kolbenboden entferntere) Abstreifkante einen ausreichenden Kontakt zu der Zylinderinnenfläche aufrechterhält.

In einer zusätzlichen beispielhaften Ausführungsform des zweiteiligen Kolbenrings ist die Kante, an der sich die Innenfläche des Laufflächenschenkels mit dem Ringflankensteg trifft, verrundet oder eingezogen. Der Begriff "eingezogen" bedeutet hier eine Materialstärkenverminderung, bei der die Kante mit einer Hohlkehle versehen ist, die verhindern soll, dass die Feder an der Kante einer hohen Reibung ausgesetzt ist.

In einer weiteren beispielhaften Ausführungsform des zweiteiligen Kolbenrings ist dieser als Rechteckring, Minutenring, Nasenring ein Nasen-Minutenring und/oder als Trapezring jeweils mit einem großen Innenwinkel ausgeführt. Der große Innenwinkel ist ähnlich einer Innenphase an dem Kolbenring angeordnet und verleiht einem im Querschnitt rechteckigen Ring eine im Querschnitt L-förmige Gestalt. Der Innenwinkel bewirkt dabei einen negativen Ringtwist des Grundkörpers.

In einer zusätzlichen beispielhaften Ausführungsform des zweiteiligen Kolbenrings liegt dieser, sofern er als Kompressionsring ausgeführt ist, mit der Kolbenringflanke auf der dem Kolbenboden abgewandten Seite der Kolbenringnut auf. In dieser Ausführung als Kompressionsring wird dieser vom Brennraum aus gesehen durch das axiale Stabilisierungselement nach unten gedrückt. Dadurch kann die Abdichtung des Rings zwischen dem Ringflankensteg und der unteren Kolbenringnutflanke weiter verbessert werden.

In einer zusätzlichen beispielhaften Ausführungsform des zweiteiligen Kolbenrings liegt dieser, wenn er als Ölabstreifring ausgeführt ist, mit der Kolbenringflanke auf der dem Kolbenboden zugewandten Seite der Kolbenringnut auf. dadurch kann besser verhindert werden, dass Öl durch die Kolbenringnut hinter den Kolbenring gelangen kann.

Gemäß einem weiteren Aspekt der vorliegenden Erfindung wird Mäander- oder Schlauchfeder für einen zweiteiligen Kolbenring bereitgestellt. Die Schlauch- oder Mäanderfeder weist Abschnitte auf die in Axialrichtung verlaufen, wobei die Steigung der Abschnitte Axialrichtung jeweils in die gleiche Richtung verläuft. Bei der Mäander- oder Schlauchfeder weist die Steigung von Abschnitten der Feder die in Axialrichtung verlaufen jeweils das gleiche Vorzeichen aufweisen. Die Feder kann vom der Zylinderachse aus als eine Art Sägezahnlinie betrachtet werden bei der die Steigungen der Abschnitte die in Axialrichtung verlaufen alle Positiv sind. Wenn gerade in Radialrichtung verlaufende Abschnitte eingefügt werden, können die in Axialrichtung verlaufenden Abschnitte ebenfalls die gleiche Steigung bzw. den gleichen Steigungswert aufweisen. Wenn die Feder als Schlauchfeder ausgeführt ist, können die in Radialrichtung verlaufenden Abschnitte dazu genutzt werdenden Versatz der Axialen Abschnitte auszugleichen. Wenn die Feder als Mäanderfeder ausgeführt ist, können die in Umfangsrichtung d.h. parallel zu der Radialrichtung verlaufenden Abschnitte dazu genutzt werdenden Versatz der Axialen Abschnitte auszugleichen.

Gemäß einem weiteren Aspekt der vorliegenden Erfindung wird ein zweiteiliger Kolbenring mit axialer Stabilisierung bereitgestellt wie er vorstehend beschrieben ist, wobei die vorstehend beschriebene Mäander- oder Schlauchfeder eingesetzt wird. Die genannte Feder weist zwar geringere Fähigkeiten in Bezug auf eine Expanderwirkung auf, kann aber dazu genutzt werden die Kräfte in Axialrichtung genau einzustellen. Die Feder gestattet es ebenfalls, dass sich der Kolbenring trotz der Feder in der Kolbenringnut drehen kann, sofern ein Kraftwirkung auf den Kolbenring ausreicht, und die Feder in Axialrichtung zusammenzudrücken. Bei eine, Zusammendrücken werden die axialen Abschnitte der Feder den Kolbenring in eine Richtung weiterschieben, während bei einer Entlastungsbewegung der Kolbnring gegen die Feder oder die Feder gegen die Kolbenringnut gleiten kann. Dadurch kann ein Einlaufen der Stoßenden an der Zylinderinnenwand verhindert werden.

Im Folgenden wird die Erfindung anhand von schematischen Figuren beispielhaften Ausführungsformen erläutert, die die den Schutzbereich der vorliegenden Ansprüche jedoch nicht beschränken sollen.
Figuren 1 bis 3 zeigen Querschnittsansichten von verschiedene Ausführungsformen eines erfindungsgemäßen zweiteiligen Kolbenrings.
Figur 4 zeigt eine innere Ansicht eines nicht eingebauten zweiteiligen Kolbenrings mit entspannte, axialen Stabilisierungselements von Figur 3.
Figuren 5 und 6 zeigen Querschnittsansichten von verschiedene Ausführungsformen die einen Twist des Grundkörpers zweiteiligen Kolbenrings berücksichtigen.
Figur 7 zeigt eine schematische perspektivische Ansicht des Kolbenrings von Figur 3.
Figuren 8, 9A und 9B zeigen eine Aufsicht und Schnittansichten einer Ausführung des axialen Stabilisierungselements.
Figur 10 Zeigt eine Ausführung mit einer rechteckigen Schlauchfeder.
Figuren 10A bis 10C zeigen weitere Ansichten einer Schlauchfeder.
Figuren 10D zeig eine Seitenansicht einer Schlauch- oder Mäanderfeder.
Figur 11 zeigt eine Schnittansicht eines erfindungsgemäßen eingebauten Ölabstreifrings.
Figur 12 zeigt eine Schnittansicht eines erfindungsgemäßen eingebauten Kompressionsrings.

Sowohl in den Figuren als auch in der Beschreibung werden gleiche oder ähnliche Bezugszeichen verwendet und gleiche oder ähnliche Komponenten und Elemente zu kennzeichnen. Da eine Bezugszeichenliste beigefügt ist wird nicht bei jeder Figur jedes Bezugszeichen im Einzelnen beschrieben, das bereits in einer vorherigen Figur beschrieben wurde.

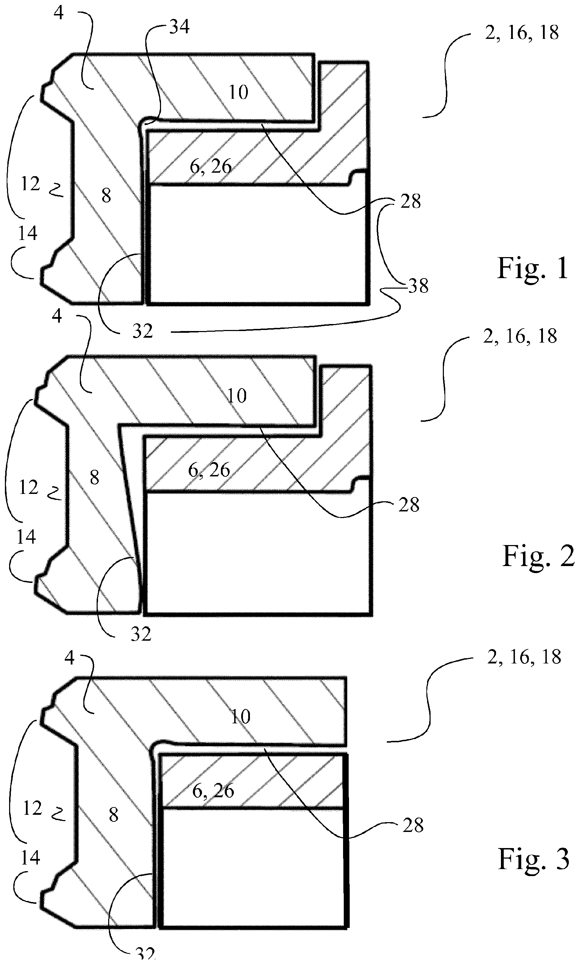

Figur 1 zeigt eine Querschnittsansicht einer Ausführungsform eines erfindungsgemäßen zweiteiligen Kolbenrings 2. Der Kolbenring setzt sich hier aus einem Grundkörper 4 und einem axialen Stabilisierungselement 6 zusammen. Der Grundkörper 4 weist im Querschnitt einen Laufflächenschenkel 8 auf, der einen in Radialrichtung dünnen Ring bildet, und weist zudem einen Ringflankensteg 10 auf, der einen in Axialrichtung dünnen Ring bildet. Der Laufflächenschenkel 8 und der Ringflankensteg 10 bilden eine im radialen Schnitt im Wesentlichen L-förmige Querschnittsfläche.

Der Laufflächenschenkel 8 weist auf seiner Außenseite eine äußere Lauffläche 12 auf, die in Figur 1 mit zwei Abstreifstegen 14 versehen ist. Es sollte klar sein, dass der Kolbenring auch mit nur einem Abstreifsteg 14 oder mit mehr, beispielsweise drei oder vier Abstreifstegen versehen sein kann. Der zweiteilige Kolbenring von Figur 1 ist als Ölabstreifring 16 ausgeführt. Die Abstreifstege 14 sind so ausgeführt, dass der Ölabstreifring 16 als Dachfasenring 18 bezeichnet werden kann. Es ist ebenfalls möglich, den Ölabstreifring 16 beispielsweise als Gleichfasenring auszuführen.

Der Grundkörper 4 ist mit einem großen Innenwinkel 38 versehen, der durch die innere Flankenfläche 28 des Ringflankenstegs 10 und der Innenfläche 32 des Laufflächenschenkels 8 gebildet wird. In dem Innenwinkel 38 ist das axiale Stabilisierungselement 6 eingelegt, das sich in Figur 1 nach innen über den Ringflankensteg 10 hinaus erstreckt. Die Innenkante des Innenwinkels 38 kann mit einer Verrundung bzw. mit einem Einzug 34 versehen sein, um eine Reibung einer Kante der Mäanderfeder 26 zu verringern.

Das axiale Stabilisierungselement 6 erstreckt sich in Figur 1 ebenfalls in der Höhe bzw. in Axialrichtung innen zumindest teilweise über den Ringflankensteg 10, wodurch falls das axiale Stabilisierungselement ebenfalls als Expander wirkt, auch der obere Teil der Lauffläche (mit dem Rinflankensteg 10) gegen eine Zylinderfläche gedrückt wird. Das axiale Stabilisierungselement 6 ist hier als Mäanderfeder 26 ausgelegt.

Figur 2 zeigt im Wesentlichen die Ausführungsform von Figur 1, mit dem Unterschied, dass der axiale Verlauf der Innenfläche 32 des Laufflächenschenkels 8 konisch ausgeführt ist, wobei der größte Innendurchmessers der Innenfläche 32 an dem Ringflankensteg 10 liegt. So kann sichergestellt werden, dass ein unterer Abstreifsteg 14 von dem axialen Stabilisierungselement 6 das hier ebenfalls als Expanderfeder wirkt auch gegen eine Zylinderinnenfläche gedrückt wird.

Figur 3 zeigt den Grundkörper 4 von Figur 1, zusammen mit einem anderen Stabilisierungselement 6. Hier erstreckt sich das axiale Stabilisierungselement 6 in der Höhe bzw. in Axialrichtung innen über den Ringflankensteg 10. Dies gestattet eine kompaktere Bauweise in Fällen in denen eine Wirkung des axialen Stabilisierungselements 6 als Expanderfeder nicht im Vordergrund steht.

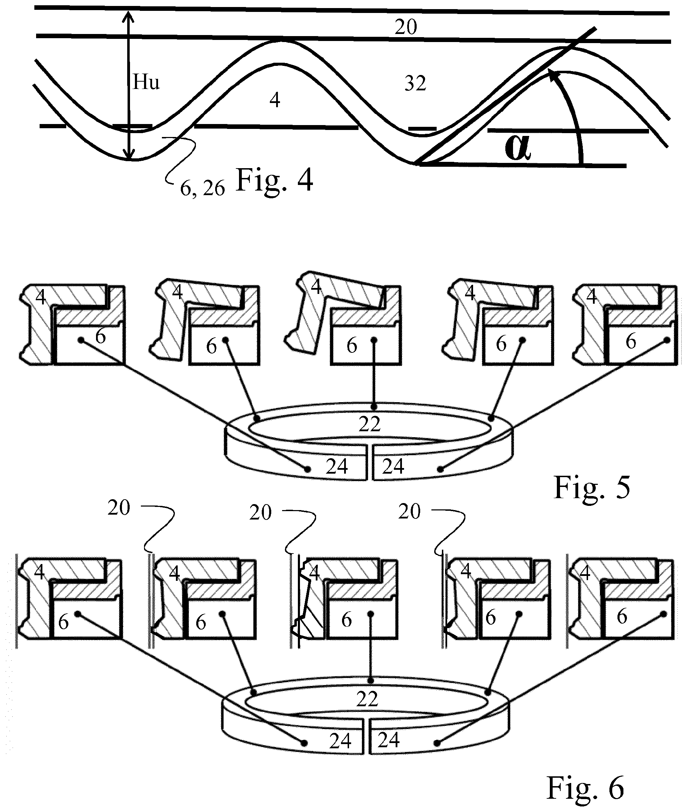

Figur 4 zeigt eine innere Ansicht eines nicht eingebauten zweiteiligen Kolbenrings 2 von Figur 3 mit entspanntem, axialen Stabilisierungselement 6. Das axiale Stabilisierungselement 6 erstreckt sich nur innerhalb des Innenwinkels 38, und verläuft als Mäanderfeder 26 wellenförmig zwischen dem Ringflankensteg 10 und dem freien Ende des Laufflächenstegs 8. Der zweiteilige Kolbenring 2 weist dabei eine Gesamthöhe Hu auf, die der Höhe des zweiteiligen Kolbenrings bei unbelastetem Stabilisierungselement entspricht, Die Höhe Hu ist dabei größer als eine entsprechende Breite bzw. Höhe H (in Figur 4 nicht dargestellt) der entsprechenden Kolbenringnut. Die Höhe Hu kann bei Verwendung einer mäanderförmigen Feder auch erst beim Zusammendrücken des Kolbenrings auf den Zylinderinnendurchmesser größer werden als die Höhe H der Kolbennut, da eine Mäanderfeder ihre Breite bzw. Höhe analog "Amplitude" erhöht, wenn sie in Umfangsrichtung zusammengedrückt wird. In Figur 4 ist der Mäanderwinkel α dargestellt, der als der steilste Verlauf der Mäanderfeder in Bezug auf die Ringebene definiert ist. Die Höhe des Grundkörpers soll dabei nur unwesentlich kleiner sein als die Höhe der Kolbenringnut, für die der erfindungsgemäße Kolbenring bestimmt ist. Das axiale Stabilisierungselement 6 drückt dabei den zweiteiligen Kolbenring gegen die Flanken der Kolbenringnut, wodurch die Beweglichkeit des Kolbenrings in Umfangsrichtung stark herabgesetzt ist. Dadurch, dass der Kolbenring mit einer Flanke gegen die Kolbenringnutflanke gedrückt wird, kann ein Ölverlust durch den Spalt zwischen Kolbenringflanke und Kolbenringnutflanke deutlich verringert werden.
Der Ölabstreifring kann auch mit konisch-zylindrischen Laufstegen versehen werden, um den Ölverbrauch und die Reibung weiter zu senken. Bei einem LKZ-Ring sind ein sehr kleiner zylindrischer Laufstegbereich mit einer Stufe und einer Konizität des Laufsteges kombiniert. Das Ergebnis zeigt bei einer Abwärtsbewegung ein gewünschtes, ausgeprägtes Ölabstreifverhalten. Gleichzeitig wird beim Aufwärtshub ein unerwünschter Transport von Schmieröl in Richtung Brennraum durch die LKZ Gestaltung der Laufstege deutlich verringert.

Figur 5 zeigt Querschnittsansichten entlang dem Umfang eines nicht eingebauten Kolbenrings mit einem deutlichen eingeprägten positiven Pre-Twist. Dabei ist der Grundkörper am Kolbenringrücken 20 am stärksten vorgetwisted bzw. vorverwunden. Im Bereich der Stoßenden 22 wird hingegen eine geringere Verwindung vorgesehen, da der durch den Innenwinkel entstehende negative Ringtwist sich am stärksten am Ringrücken 20 auswirkt.

Figur 6 sind Querschnittsansichten entlang dem Umfang eines nicht eingebauten Kolbenrings mit einem vordefinierten Stegversatz oder Versatz 20. Dieser Stegversatz 20 ist auch hier am Kolbenringrücken 20 am stärksten ausgeprägt. Im Bereich der Stoßenden 22 wird hingegen ein geringerer Versatz 20 vorgesehen, da der durch den Innenwinkel entstehende Ringtwist sich am stärksten am Ringrücken 20 auswirkt.

Es ist ebenfalls möglich, einen Kolbenring mit einem vordefinierten Stegversatz oder Versatz 20 ebenfalls mit einem vordefinierten Ringtwist zu versehen, um die Ölabstreif- oder Dichtwirkung des Kolbenrings 2 weiter zu verbessern.

Bei dem Ring von Figur 6 wird angenommen dass er sich in der dargestellten Einbaulage negativ vertwistet, dies wird hier durch einen Versatz der Abstreifkante ausgeglichen.

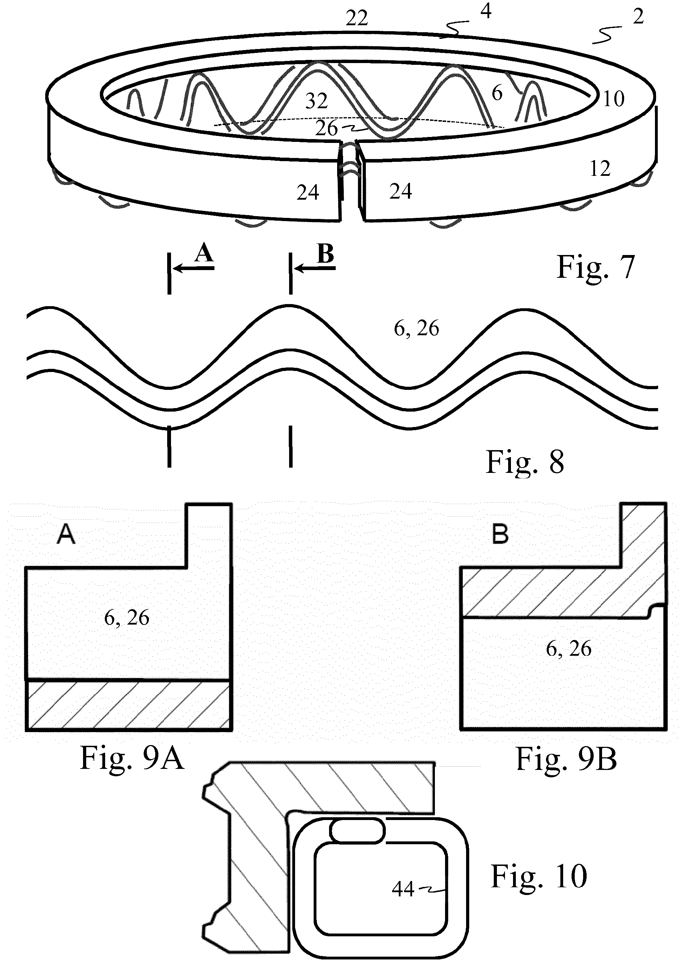

Figur 7 zeigt eine schematische perspektivische Ansicht des Kolbenrings von Figur 3. Hier erstreckt sich das als Mäanderfeder 26 ausgeführte Stabilisierungselement 6 nur innerhalb des Innenwinkels 38. Wie zu erkennen ist, verläuft die Mäanderfeder 26 in Wellen. Die Mäanderfeder 26 dient hier als lange Blattfeder, die den Kolbenringgrundkörper 4 von einem Boden abhebt. An den Stoßenden 22 ist zu erkennen dass die Mäanderfeder 26 geschlossen sein kann. Weiterhin ist an den Stoßenden 22 der L-förmige Querschnitt des Grundkörpers 4 zu erkennen.

Figuren 8, 9A und 9B zeigen eine Aufsicht und Schnittansichten einer Ausführung des axialen Stabilisierungselements von Figuren 1 und 2.

Die Mäanderfeder 26 weist eine Stufe auf, mit der die Mäanderfeder 26 auch hinter den Ringflankensteg 10 greifen kann. Diese Ausführung ist vor allen dann von Vorteil, wenn die Mäanderfeder 26 ebenfalls als Expanderfeder dienen soll, wie es von herkömmlichen zweiteiligen Kolbenringen bekannt ist.

Die in Figur 8 dargestellten Schnittlinien A und B sind als Schnittansicht in den Figuren 9A und 9B dargestellt.

In Figur 9A ist ein Schnitt entlang der Schnittlinien A von Figur 8 dargestellt. Die Mäanderfeder 26 ist an dem unteren Bereich, an dem die Mäanderfeder 26 auf der Kolbenringnutflanke aufliegen soll, geschnitten. In dem unteren Bereich weist die Mäanderfeder 26 einen rechteckigen Querschnitt auf.

In Figur 9B ist ein Schnitt entlang der Schnittlinien B von Figur 8 dargestellt. Die Mäanderfeder 26 ist an dem oberen Bereich, an dem die Mäanderfeder 26 auf der inneren Flankenfläche des Ringflankenstegs 10 aufliegen soll, geschnitten. In diesem Bereich weist die Mäanderfeder 26 einen im Wesentlichen L-förmigen Querschnitt auf. Durch den L-förmigen Querschnitt kann die Mäanderfeder ebenfalls als Expanderfeder wirken und den Ringflankensteg ebenfalls nach außen in Richtung Zylinderinnenfläche drücken.

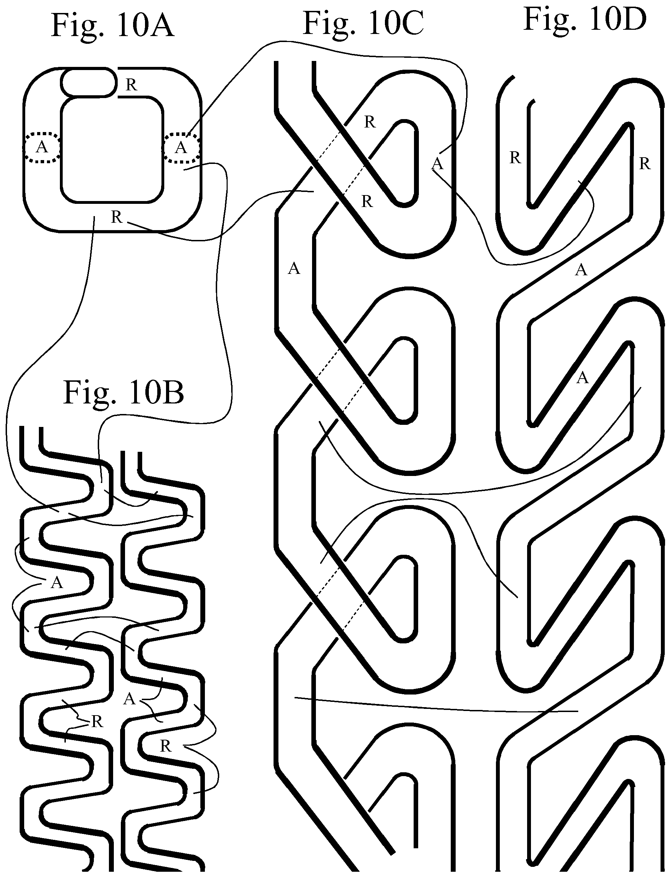

In Figur 10 ist ein weiterer Querschnitt durch einen erfindungsgemäßen zweiteiligen Kolbenring dargestellt. Der Grundkörper ist der gleiche wie bei den Figuren 1 und 3, während das Axiale Stabilisierungselement als rechteckige Schlauchfeder 44 ausgeführt ist. Die Schlauchfeder kann auch als im Querschnitt L-förmige Schlauchfeder ausgeführt sein.

In Figur 10A ist der Querschnitt durch die Schlauchfeder 44 von Figur 10 dargestellt. IUn Figur 10A ist die rechteckige Schlauchfeder 44 in radiale Abschnitte (R), die im Wesentlichen in Radialrichtung bzw. parallel zu den Ringnutflanken verlaufen und Axialabschnitte (A) unterteilt die zwischen den Ringnutflanken verlaufen.

In der Schnittansicht der Figur 10A ist die Steigung der Feder nicht zu erkennen, sie kann jedoch so gewählt werden, dass die Steigung in Aufwärts- und in Abwärtsrichtung bzw. Axialrichtung gleich ist, wobei der resultierende Versatz durch die entsprechenden radialen Abschnitte ausgeglichen werden kann. Dadurch könnte eine Beweglichkeit des Kolbenrings in einer Umfangsrichtung gesteigert werden, wie in den Figuren 10C und 10D dargestellt.

In Figur 10B ist auf der rechten Seite eine schematische Ansicht von der Zylinderachse aus auf die Rechteckfeder dargestellt. In Figur 10B ist auf der linken Seite eine schematische Aufsicht auf die gestreckte Rechteckfeder in Axialrichtung dargestellt. Die Steigung weist überall im Wesentlichen den gleichen Betrag jedoch in der Projektion eine andere Richtung und damit ein anderes Vorzeichen auf.

In Figur 10D ist eine Seitenansicht auf eine Ring- oder auch eine Mäanderfeder dargestellt, bei der in der Projektion die Steigungen alle das gleiche Vorzeichen aufweisen. Dabei verlaufen beide axialen Abschnitte in die gleiche Umfangsrichtung, oder weisen wie bei einem Gewinde die gleiche Gangrichtung auf. Dieses Profil kann man als Mäanderfeder oder auch als Schlauchfeder einsetzen. Bei Belastung von links und rechts wird die Feder zusammengedrückt und die axialen Abschnitte kippen, sodass sie die rechte Seite nach oben und die linke Seite der Feder nach unten bewegen. Bei Verwendung mit dem erfindungsgemäßen Kolbenring kann bei einem Herunterdrücken des Kolbenrings in Axialrichtung gegen die Feder der Ring in Umfangsrichtung bewegt werden. Bei einer Entlastung besteht eine weniger starke Kopplung, sodass der Ring sich nur in Axialrichtung bewegen wird. Durch die Feder kann der Ring dazu gebracht werden, sich im Betrieb in der Kolbenringnut in Umfangsrichtung zu bewegen.

Figur 10C ist eine Aufsicht auf eine Schlauchfeder mit dem Querschnitt von Figur 10A und eine Seitenansicht von Figur 10D. Die radialen Abschnitte (R) sind dabei so ausgeführt, dass sie den Versatz der durch die in gleicher Steigungs- bzw. Gewindegangrichtung ausgerichteten axialen Abschnitte (A) ausgleichen können.

Zum leichteren Verständnis der Figuren 10B bis 10D sind Abschnitte die sich näher biem Betrachter befinden mit einer größeren Strichstärke dargestellt, während Abschnitte die sich in einer größeren Entfernung vom Betrachter befinden mit einer geringeren Strichstärke dargestellt.

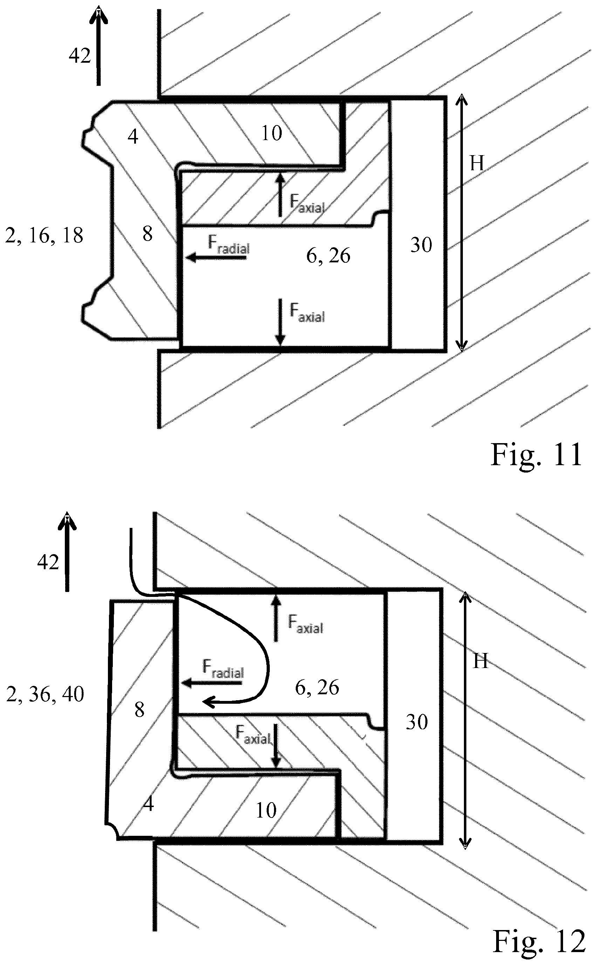

Figuren 11 und 12 zeigen jeweils eingebaute erfindungsgemäße Kolbenringe.

In Figur 11 ist der Kolbenring in eine Kolbenringnut 30 eingelegt. Das axiale Stabilisierungselement 6 ist als eine Mäanderfeder 26 ausgeführt, deren Wellen sich senkrecht zur Ringebene erstrecken. In Figur 11 ist der Kolbenring 2 als Ölabstreifring 16, genauer als Dachfasenring 18 ausgeführt. Die Mäanderfeder 26 drückt den Grundkörper 4 gegen die obere, d.h. in Axialrichtung in Richtung Kolbenboden gelegene Kolbenringnutflanke mit einer Axialkraft Fₐₓᵢₐₗ. Die Mäanderfeder übt eine gleichstarke Kraft Fₐₓᵢₐₗ auf die gegenüberliegende untere Kolbenringnutflanke aus (zuzüglich einer Gewichtskraft des Kolbenrings die hier aber vernachlässigt wird). Durch die Mäanderfeder 26 wird der Spalt zwischen dem Ringflankenschenkel 10 und der Kolbenringnutflanke stärker geschlossen, wodurch ein Ölverlust durch diesen Spalt weiter verringert werden kann. Durch die zusammengedrückte Mäanderfeder 26 füllt der Kolbenring 2 die gesamte Höhe H der Kolbenringnut 30 aus. Die Mäanderfeder 26 übt weiterhin eine Radialkraft F_{radial} aus, da sie ebenfalls als Expanderfeder wirkt.

Öl, das bei einer Abwärtsbewegung abgestreift wird, kann durch den durch die Feder 26 bzw. das axiale Stabilisierungselement 6 offen gehaltenen Spalt zwischen dem freien Ende des Laufflächenschenkels 8 und der unteren Kolbenringnutflanke hinter den Ölabstreifring 16 gelangen und so durch (nicht dargestellte) Ölablaufkanäle abgeführt werden.

In Figur 12 ist der Kolbenring ebenfalls in eine Kolbenringnut 30 eingelegt. Das axiale Stabilisierungselement 6 ist hier auch als eine Mäanderfeder 26 ausgeführt, deren Wellen sich senkrecht zur Ringebene erstrecken. In Figur 12 ist der Kolbenring 2 als Kompressionsring 40, spezieller als Nasen-Minutenring 36, ausgeführt.

Im Gegensatz zu Figur 11 drückt die Mäanderfeder 26 den Grundkörper 4 gegen die untere, d.h. in Axialrichtung von dem Kolbenboden weg gelegene Kolbenringnutflanke mit einer Axialkraft Fₐₓᵢₐₗ. Die Mäanderfeder übt auch hier eine gleichstarke Kraft Fₐₓᵢₐₗ auf die gegenüberliegende obere Kolbenringnutflanke aus (auch hier wird die Gewichtskraft des Kolbenrings vernachlässigt). Durch die Mäanderfeder 26 wird der Spalt zwischen dem Ringflankenschenkel 10 und der unteren Kolbenringnutflanke stärker geschlossen, wodurch eine bessere Abdichtung des Brennraums erreicht werden kann. Sollte sich die Struktur des Kolbenrings für einen ersten Kolbenring als zu empfindlich herausstellen, so sollte es jedoch möglich sein diese in einem weniger stark belasteten mittleren Kolbenring einzusetzen. Durch die zusammengedrückte Mäanderfeder 26 füllt der Kolbenring 2 auch hier die gesamte Höhe H der Kolbenringnut 30 aus.

Hier können Verbrennungsgase bei einer Abwärtsbewegung durch den, durch die Feder 26 bzw. das axiale Stabilisierungselement 6 offen gehaltenen Spalt zwischen dem freien Ende des Laufflächenschenkels 8 und der oberen Kolbenringnutflanke hinter den Nasen-Minutenring 36 gelangen, wodurch der Anpressdruck des Kolbenrings gegen die Zylinderinnenwand und die untere Kolbenringnutflanke weiter erhöht werden kann. Die Mäanderfeder 26 kann hier eine weit geringere Radialkraft F_{radial} ausüben, da die Radialkraft ebenfalls durch den Druck der Verbrennungsgase erzeugt wird. Die Erfindung ist nicht nur auf die wenigen dargestellten Ausführungsformen beschränkt. Es ist beabsichtigt, dass auch alle möglichen Kombinationen von Merkmalen der Beschreibung als offenbart gelten sofern der Fachmann sie in Betracht ziehen würde.

### Bezugszeichenliste

- 2: Zweiteiliger Kolbenring
- 4: Grundkörper
- 6.: Axiales Stabilisierungselement
- 8: Laufflächenschenkel
- 10: Ringflankensteg
- 12: äußere Lauffläche
- 14: Abstreifsteg
- 16: Ölabstreifring
- 18: Dachfasenring
- 20: Versatz
- 22: Ringrücken
- 24: Stoßenden
- 26: Mäanderfeder
- 28: innere Flankenfläche des Ringflankenstegs
- 30: Kolbenringnut
- 32: Innenfläche des Laufflächenschenkels
- 34: Verrundung / Einzug
- 36: Nasen-Minutenring
- 38: großer Innenwinkel
- 40: Kompressionsring
- 42: Axialrichtung in Richtung Kolbenboden
- 44: rechteckige Schlauchfeder

- α: Mäanderwinkel
- A: axialer Abschnitt
- Fₐₓᵢₐₗ: Axialkraft
- F_{radial}: Radialkraft
- H: Gesamthöhe des zweiteiligen Kolbenrings bzw. Gesamthöhe der Kolbenringnut
- Hu: Gesamthöhe des zweiteiligen Kolbenrings bei unbelastetem Stabilisierungselement
- R: radialer Abschnitt

## Patentansprüche

1. Zweiteiliger Kolbenring (2) mit axialer Stabilisierung, umfassend einen Grundkörper (4) mit einem im Wesentlichen L-förmigen Querschnitt,
mit einer äußeren Lauffläche (12), die an einem Laufflächenschenkel (8) angeordnet ist und mit einem Ringflankensteg (10), die zusammen zwei Schenkel des L-förmigen Querschnitts bilden, und
ein axiales Stabilisierungselement (6), das zumindest teilweise an dem Ringflankensteg (10) anliegend angeordnet ist,
wobei das Stabilisierungselement (6) in Axialrichtung elastisch ist und
wobei das Stabilisierungselement (6) über den Laufflächenschenkel (8) übersteht wobei der zweiteilige Kolbenring (2) zwei, weiter bevorzugt mindestens zwei Abstreifstege (14) aufweist, die auf der Lauffläche (12) angeordnet sind, **dadurch gekennzeichnet, dass**
die zwei bzw. mindestens zwei Abstreifstege (14) einen Versatz (20) aufweisen und/oder
der Grundkörper (4) im nicht eingebauten Zustand vorgetwistet ist.

2. Zweiteiliger Kolbenring (2) mit axialer Stabilisierung gemäß Anspruch 1, **dadurch gekennzeichnet, dass** der nicht gespannte zweiteilige Kolbenring (2) durch das in Axialrichtung entspannte Stabilisierungselement (6) eine Höhe (Hu) aufweist, die größer ist als eine Breite (H) der Kolbenringnut (30), in der er verwendet werden soll.

3. Zweiteiliger Kolbenring (2) mit axialer Stabilisierung gemäß Anspruch 1 oder 2, **dadurch gekennzeichnet, dass** der gespannte und nicht eingebaute zweiteilige Kolbenring (2) eine Höhe (Hu) aufweist, die größer ist als eine Breite (H) der Kolbenringnut (30), in der er verwendet werden soll.

4. Zweiteiliger Kolbenring (2) mit axialer Stabilisierung, gemäß einem der vorstehenden Ansprüche, **dadurch gekennzeichnet, dass** der Ölabstreifring (2;16) als Ölschlitzring und/oder als Dachfasenring (18) oder als Gleichfasenring ausgeführt ist.

5. Zweiteiliger Kolbenring (2) mit axialer Stabilisierung, gemäß einem der vorstehenden Ansprüche, **dadurch gekennzeichnet, dass** der Grundkörper (4) in Umfangsrichtung unterschiedlich vorgetwistet ist, wobei bevorzugt der Twist an dem Ringrücken (22) stärker ausgeführt als an den Stoßenden (24), und/oder dass die Abstreifstege (14) am Grundkörper (4) in Umfangsrichtung mit einem unterschiedlichen Versatz (20) angeordnet sind, wobei bevorzugt der Versatz an dem Ringrücken (22) stärker ausgeführt ist als an den Stoßenden (24).

6. Zweiteiliger Kolbenring (2) mit axialer Stabilisierung, gemäß einem der vorstehenden Ansprüche, **dadurch gekennzeichnet, dass** das axiale Stabilisierungselement (6) als Mäanderfeder (26) ausgeführt ist, oder dass das axiale Stabilisierungselement (6) als L-förmige oder rechteckige Schlauchfeder (44) ausgeführt ist.

7. Zweiteiliger Kolbenring (2) mit axialer Stabilisierung, gemäß Anspruch 6, **dadurch gekennzeichnet, dass** die Mäanderfeder (26) einen Mäanderwinkel (α) zur Kolbenringebene von weniger als 90°, bevorzugt von 20° bis 70°, weiter bevorzugt von 30° bis 60°, noch weiter bevorzugt von 40° bis 50° aufweist.

8. Zweiteiliger Kolbenring (2) mit axialer Stabilisierung, gemäß einem der vorstehenden Ansprüche, **dadurch gekennzeichnet, dass** das axiale Stabilisierungselement (6) radial nach innen über den Ringflankensteg (10) übersteht.

9. Zweiteiliger Kolbenring (2) mit axialer Stabilisierung, gemäß einem der vorstehenden Ansprüche, **dadurch gekennzeichnet, dass** das axiale Stabilisierungselement (6) in Axialrichtung über eine innere Flankenfläche (28) des Ringflankenstegs (10) übersteht.

10. Zweiteiliger Kolbenring (2) mit axialer Stabilisierung, gemäß einem der vorstehenden Ansprüche, **dadurch gekennzeichnet, dass** das axiale Stabilisierungselement (6) eine ungespannte Länge aufweist, die größer ist als die Länge der Kolbenringnut (30).

11. Zweiteiliger Kolbenring (2) mit axialer Stabilisierung, gemäß einem der vorstehenden Ansprüche, **dadurch gekennzeichnet, dass** die Innenfläche (32) des Laufflächenschenkels (8) sich von dem Ringflankensteg (10) in Richtung weg von dem Ringflankensteg (10) verjüngt und bevorzugt konisch verjüngt.

12. Zweiteiliger Kolbenring (2) mit axialer Stabilisierung, gemäß einem der vorstehenden Ansprüche, **dadurch gekennzeichnet, dass** die Kante, an der sich die Innenfläche (32) des Laufflächenschenkels (8) mit dem Ringflankensteg (10) trifft, eine Verrundung (34) oder einen Einzug (34) aufweist.

13. Zweiteiliger Kolbenring (2) mit axialer Stabilisierung, gemäß einem der vorstehenden Ansprüche, **dadurch gekennzeichnet, dass** der Kolbenring ein Rechteckring, ein Minutenring, ein Nasenring, ein Nasen-Minutenring (36) und/oder ein Trapezring mit einem großen Innenwinkel (38) ist, und/oder wobei der Kolbenring sofern er als Kompressionsring (40) ausgeführt ist mit der äußeren Flanke des Ringflankenstegs (10) des Grundkörpers (4) auf der dem Kolbenboden abgewandten Seite der Kolbenringnut (30) aufliegt, und wenn er als Ölabstreifring (16) ausgeführt ist mit der äußeren Flanke des Ringflankenstegs (10) des Grundkörpers (4) auf der dem Kolbenboden zugewandten Seite der Kolbenringnut (30) aufliegt.

## Claims

1. An axially stabilized two-part piston ring (2), comprising a base body (4) having an essentially L-shaped cross section,
with an outer running surface (12) that is situated on a running surface leg (8), and with a ring flank web (10), which together form two legs of the L-shaped cross section, and
an axial stabilizing element (6) that is situated so that it at least partially rests against the ring flank web (10),
wherein the stabilizing element (6) is elastic in the axial direction and
wherein the stabilizing element (6) protrudes beyond the running surface leg (8),
wherein the two-part piston ring (2) has two, more preferably at least two, oil scraper webs (14) situated on the running surface (12),
**characterized in that**
the two or the at least two oil scraper webs (14) have an offset (20)
and/or
the base body (4) is pretwisted in the uninstalled state.

2. The axially stabilized two-part piston ring (2) according to Claim 1, **characterized in that** the untensioned two-part piston ring (2), due to the stabilizing element (6) that is relaxed in the axial direction, has a height (Hu) that is greater than a width (H) of the piston ring groove (30) in which it is to be used.

3. The axially stabilized two-part piston ring (2) according to Claim 1 or 2, **characterized in that** the tensioned and uninstalled two-part piston ring (2) has a height (Hu) that is greater than a width (H) of the piston ring groove (30) in which it is to be used.

4. The axially stabilized two-part piston ring (2) according to one of the preceding claims, **characterized in that** the oil scraper ring (2; 16) is designed as a slotted oil scraper ring and/or as a beveled oil control ring (18) or as a double-beveled control oil ring.

5. The axially stabilized two-part piston ring (2) according to one of the preceding claims, **characterized in that** the base body (4) is pretwisted differently in the circumferential direction, wherein the twist at the ring back (22) is greater than at the butt ends (24), and/or that the oil scraper webs (14) are situated on the base body (4) with a different offset (20) in the circumferential direction, wherein the offset is preferably greater at the ring back (22) than at the butt ends (24).

6. The axially stabilized two-part piston ring (2) according to one of the preceding claims, **characterized in that** the axial stabilizing element (6) is designed as a meander spring (26), or that the axial stabilizing element (6) is designed as an L-shaped or rectangular tube spring (44).

7. The axially stabilized two-part piston ring (2) according to Claim 6, **characterized in that** the meander spring (26) has a meander angle (α) with respect to the piston ring plane of less than 90°, preferably 20° to 70°, more preferably 30° to 60°, even more preferably 40° to 50°.

8. The axially stabilized two-part piston ring (2) according to one of the preceding claims, **characterized in that** the axial stabilizing element (6) protrudes radially inwardly beyond the ring flank web (10).

9. The axially stabilized two-part piston ring (2) according to one of the preceding claims, **characterized in that** in the axial direction the axial stabilizing element (6) protrudes beyond an inner flank face (28) of the ring flank web (10).

10. The axially stabilized two-part piston ring (2) according to one of the preceding claims, **characterized in that** the axial stabilizing element (6) has an untensioned length that is greater than the length of the piston ring groove (30).

11. The axially stabilized two-part piston ring (2) according to one of the preceding claims, **characterized in that** the inner surface (32) of the running surface leg (8) tapers, preferably conically tapers, from the ring flank web (10) in the direction away from the ring flank web (10).

12. The axially stabilized two-part piston ring (2) according to one of the preceding claims, **characterized in that** the edge at which the inner surface (32) of the running surface leg (8) meets the ring flank web (10) has rounding (34) or an indentation (34).

13. The axially stabilized two-part piston ring (2) according to one of the preceding claims, **characterized in that** the piston ring is a rectangular ring, a taper faced ring, a napier ring, a napier taper faced ring (36), and/or a keystone ring having a large internal angle (38), and/or wherein the piston ring, if it is designed as a compression ring (40), rests with the outer flank of the ring flank web (10) of the base body (4) on the side of the piston ring groove (30) facing away from the piston base, and if it is designed as an oil scraper ring (16), rests with the outer flank of the ring flank web (10) of the base body (4) on the side of the piston ring groove (30) facing the piston base.

## Revendications

1. Segment de piston (2) en deux parties stabilisé axialement, comprenant
un corps de base (4) à section transversale sensiblement en forme de L qui est pourvu d'une surface de roulement extérieure (12) située sur une branche de surface de roulement (8) et d'une nervure de flanc de segment (10) qui forment conjointement deux branches de la section transversale en forme de L, et
un élément de stabilisation axiale (6) disposé de manière à venir en appui au moins partiellement sur la nervure de flanc de segment (10),
l'élément de stabilisation (6) étant élastique dans la direction axiale et
l'élément de stabilisation (6) dépassant de la branche de surface de roulement (8),
le segment de piston (2) en deux parties comportant deux, plus préférablement au moins deux, nervures de raclage (14) qui sont disposées sur la surface de roulement (12),
**caractérisé en ce que**
les deux ou les au moins deux nervures de raclage (14) présentent un décalage (20)
et / ou
le corps de base (4) présente une pré-torsion à l'état non intégré.

2. Segment de piston (2) en deux parties stabilisé axialement selon la revendication 1, **caractérisé en ce que** le segment de piston (2) en deux parties non tendu a, du fait de l'élément de stabilisation (6) détendu dans la direction axiale, une hauteur (Hu) qui est supérieure à la largeur (H) de la gorge de segment de piston (30) dans laquelle il doit être utilisé.

3. Segment de piston (2) en deux parties stabilisé axialement selon la revendication 1 ou 2, **caractérisé en ce que** le segment de piston (2) en deux parties tendu et non intégré a une hauteur (Hu) qui est supérieure à une largeur (H) de la gorge de segment de piston (30) dans laquelle il doit être utilisé.

4. Segment de piston (2) en deux parties stabilisé axialement selon l'une des revendications précédentes, **caractérisé en ce que** le segment racleur d'huile (2 ; 16) est conçu comme un segment racleur d'huile fendu et/ou comme un segment racleur d'huile type D (18) ou comme un segment racleur d'huile à biseaux égaux.

5. Segment de piston (2) en deux parties stabilisé axialement selon l'une des revendications précédentes, **caractérisé en ce que** le corps de base (4) présente dans la direction périphérique une pré-torsion différente, la torsion étant de préférence plus forte au niveau du dos de segment (22) qu'au niveau des extrémités d'aboutement (24) et/ou **en ce que** les nervures de raclage (14) sont disposées au niveau du corps de base (4) avec un décalage différent (20) dans la direction périphérique, le décalage étant de préférence plus important au niveau du dos de segment (22) qu'aux extrémités d'aboutement (24).

6. Segment de piston (2) en deux parties stabilisé axialement selon l'une des revendications précédentes, **caractérisé en ce que** l'élément de stabilisation axiale (6) est conçu comme un ressort en méandre (26), ou **en ce que** l'élément de stabilisation axial (6) est conçu comme un ressort tubulaire (44) rectangulaire ou en forme de L.

7. Segment de piston (2) en deux parties stabilisé axialement selon la revendication 6, **caractérisé en ce que** le ressort en méandre (26) présente par rapport au plan du segment de piston un angle de méandre (α) qui est inférieur à 90°, de préférence de 20° à 70°, de manière davantage préférée de 30° à 60°, encore plus préférablement de 40° à 50°.

8. Segment de piston (2) en deux parties stabilisé axialement selon l'une des revendications précédentes, **caractérisé en ce que** l'élément de stabilisation axiale (6) fait saillie de la nervure de flanc de segment (10) radialement vers l'intérieur.

9. Segment de piston (2) en deux parties stabilisé axialement selon l'une des revendications précédentes, **caractérisé en ce que** l'élément de stabilisation axiale (6) fait saillie d'une face de flanc intérieure (28) de la nervure de flanc de segment (10) dans la direction axiale.

10. Segment de piston (2) en deux parties stabilisé axialement selon l'une des revendications précédentes, **caractérisé en ce que** l'élément de stabilisation axiale (6) a une longueur non tendue qui est supérieure à la longueur de la gorge de segment de piston (30).

11. Segment de piston (2) en deux parties stabilisé axialement selon l'une des revendications précédentes, **caractérisé en ce que** la surface intérieure (32) de la branche de surface de roulement (8) se rétrécit, de préférence de manière conique, depuis la nervure de flanc de segment (10) dans la direction opposée à la nervure de flanc de segment (10).

12. Segment de piston (2) en deux parties stabilisé axialement selon l'une des revendications précédentes, **caractérisé en ce que** le bord, au niveau duquel la surface intérieur (32) de la branche de surface de roulement (8) rencontre la nervure de flanc de segment (10), présente un arrondi (34) ou un renfoncement (34).

13. Segment de piston (2) en deux parties stabilisé axialement selon l'une des revendications précédentes, **caractérisé en ce que** le segment de piston est un segment rectangulaire, un segment à faible conicité, un segment racleur, un segment racleur (36) à faible conicité, et/ou un segment trapézoïdal ayant un grand angle intérieur (38), et/ ou **en ce que** le segment de piston, s'il est conçu comme un segment de compression (40), vient en appui sur le flanc extérieur de la nervure de flanc de segment (10) du corps de base (4) sur le côté de la gorge de segment de piston (30) qui est opposé à la base de piston et, s'il est conçu comme un segment racleur d'huile (16), il vient en appui avec le flanc extérieur de la nervure de flanc de segment (10) du corps de base (4) sur le côté de la gorge de segment de piston (30) qui est dirigé vers la base de piston.
